# EUROPÄISCHE PATENTSCHRIFT

(11) **EP 0 577 609 B1**
(45) Veröffentlichungstag und Bekanntmachung des Hinweises auf die Patenterteilung: **05.04.1995**
(21) Anmeldenummer: 92904323.0
(22) Anmeldetag: 10.02.1992
(51) Int. Cl.: B60T 8/40, B60T 8/48, B60T 8/94

(54) **HYDRAULISCHE BREMSANLAGE MIT BLOCKIERSCHUTZ- UND ANTRIEBSCHLUPFREGELUNG**
HYDRAULIC BRAKING SYSTEM WITH ANTI-LOCK AND DRIVE SLIP CONTROL
SYSTEME HYDRAULIQUE DE FREINAGE A REGULATION ANTI-BLOCAGE ET ANTI-PATINAGE

(30) Priorität: 30.03.1991 DE 4110494
(43) Veröffentlichungstag der Anmeldung: 12.01.1994
(73) Patentinhaber: ALFRED TEVES GmbH, 60441 Frankfurt (DE)
(72) Erfinder: BURGDORF, Jochen, D-6050 Offenbach-Rumpenheim (DE); KUHN, Wieland, D-6350 Bad Nauheim (DE)
(74) Vertreter: Blum, Klaus-Dieter, Dipl.-Ing.
(86) Internationale Anmeldenummer: EP9200280
(87) Internationale Veröffentlichungsnummer: WO9217355

(56) Entgegenhaltungen:
- WO-A-90/02066
- DE-A- 3 241 039
- DE-A- 3 505 410
- DE-A- 3 813 172
- DE-A- 3 813 174
- GB-A- 2 194 010
- GB-A- 2 197 402
- PATENT ABSTRACTS OF JAPAN vol. 12, no. 137 (M-690)(2984) 26. April 1988
- PATENT ABSTRACTS OF JAPAN vol. 10, no. 353 (M-539)(2409) 28. November 1986

## Beschreibung

Die Erfindung bezieht sich auf eine hydraulische Bremsanlage mit Blockierschutz- und/oder Antriebsschlupfregelung, wie zum Beispiel aus DE-A-3 813 174 bekannt, mit einer elektromotorisch angetriebenen Hydraulikpumpe zur Hilfsdruckversorgung während einer geregelten Bremsung und während einer Antriebsschlupfregelung durch Bremseneingriff, mit einem elektronischen Regler zur Steuerung des Hilfsdruckes und zur Modulation oder Steuerung des Bremsdruckes in den Radbremsen der geregelten Räder in Abhängigkeit von dem Raddrehverhalten und/oder von Signalen, die die ordnungsgemäße Funktion der Bremsanlage und der Elektronik wiedergeben oder auf Fehlfunktionen hinweisen.

Bekannte hydraulische Bremsanlagen mit elektronischer Blockierschutz- und Antriebsschlupfregelung sind mit einer ein- oder mehrkreisigen Hydraulikpumpe zur Hilfsdruckversorgung ausgerüstet. Üblicherweise werden elektromotorisch angetriebene Pumpen verwendet, die beim Einsetzen der Regelung durch den zugehörigen elektronischen Regler eingeschaltet werden. Der Verbrauch an hydraulische Energie ist je nach Regelungsvorgang und Regelphase sehr unterschiedlich. Die Nennleistung des Motor-Pumpenanggregats richtet sich natürlich nach dem Höchstbedarf, der in bestimmten Situationen während einer Blockierschutzregelung auftreten kann. Zur Antriebsschlupfregelung durch Bremseneingriff, bei der die Pumpe den Druck zur Betätigung der Bremse liefern muß, wird grundsätzlich eine im Vergleich zur Blockierschutzregelung geringere Energie und ein geringerer hydraulischer Druck benötigt. Obwohl zur Antriebsschlupfregelung ein kleineres, schwächeres Motor-Pumpenaggregat genügen würde, wird aus Kostengründen dasselbe Aggregat für die Blockierschutz- und Antriebsschlupfregelung verwendet.

Das beim Einsetzen der Regelung entstehende, durch das Einschalten bzw. den Betrieb der Hydraulikpumpe verursachte Geräusch wird jedoch bei einer Antriebsschlupfregelung als störend, nämlich als komfortmindernd, empfunden. Es ist Aufgabe der vorliegenden Erfindung, auf einfache Weise und mit möglichst geringem Aufwand diese als störend empfundenen Geräusche entscheidend zu mindern. Eine Verringerung der Funktionssicherheit, auch in ungünstigen Situationen, sollte dabei jedoch vermieden werden.

Es hat sich herausgestellt, daß die Lösung dieser Aufgabe durch Weiterbildung einer Bremsanlage der eingangs genannten Art gelingt, die darin besteht, daß während eines Antriebsschlupfregelungsvorganges die Drehzahl der Hydraulikpumpe bzw. des Pumpenmotors durch Begrenzung der Leistungsaufnahme des Antriebsmotors auf einen vorgegebenen Wert, bei dem die Drehzahl und die Geräuschentwicklung relativ zur Geräuschentwicklung bei Nennleistung gering ist, reduziert wird und daß der Regler in sicherheitskritischen Situationen oder bei bestimmten Fehlfunktionen der Regelung die Leistungsbegrenzung aufhebt. Die Drehzahlbegrenzung wird zweckmäßigerweise durch den elektronischen Regler oder durch eine Zusatzschaltung gesteuert.

Erfindungsgemäß wird also bei einem Antriebsschlupfregelungsvorgang grundsätzlich die Stromaufnahme und damit Leistungsaufnahme des Antriebsmotors der Hydraulikpumpe begrenzt, wodurch die im wesentlichen von der Motordrehzahl abhängige Geräuschentwicklung erheblich, nämlich auf ein nicht mehr näher störendes oder kaum noch störendes Niveau gesenkt wird. In der Praxis genügt während der Antriebsschlupfregelung eine Drehzahl von 40 bis 60% der Nenn-Drehzahl. In sicherheitskritschen Situationen, z.B. bei zu geringer Versorgungsspannung, bei extremen Außentemperaturen usw. wird die Leistungsbegrenzung aufgehoben. Folglich wird die Verringerung der Geräuschbetätigung ohne jegliche Einbuße an die Sicherheit der geregelten Bremsanlage erreicht.

Nach einem vorteilhaften Ausführungsbeispiel der Erfindung, das sich durch besonders geringen Herstellungsaufwand auszeichnet, ist zur Begrenzung der Leistungsaufnahme in den elektrischen Anschluß des Pumpenmotors ein ohmscher Widerstand eingefügt, der bei voller Leistungsaufnahme durch den Kontakt eines von dem elektronischen Regler gesteuerten Relais überbrückt wird.

Anstelle des ohmschen Widerstandes kann erfindungsgemäß auch ein steuerbarer Widerstand verwendet werden, z.B. ein Halbleiter-Relais, ein Schalt-Transistor oder dergleichen, der zur Begrenzung der Leistungsaufnahme der Hydraulikpumpe bzw. des Motor-Pumpenaggregates mit einer Pulsfolge, die der elektronische Regler erzeugt, ansteuerbar ist. Bei Ansteuerung mit einem Dauersignal wird der innere Widerstand eines solchen steuerbaren Widerstandes vernachlässigbar klein.

Bei der zuletzt genannten Ausführungsart ist es auch möglich, durch Modulation der Pulsfolge, die zur Ansteuerung des veränderlichen Widerstandes dient, die Leistungsaufnahme der Hydraulikpumpe bzw. des Elektromotors dem jeweiligen Bedarf axakt anzupassen.

Des weiteren ist es nach einer weiteren Ausführungsart der Erfindung vorgesehen, bei einem Einsetzen der Regelung den Motor der Hydraulikpumpe zunächst mit voller Leistung anzusteuern und erst nach einer vorgegebenen Verzögerungszeitspanne von beispielsweise 100 bis 500ms die Leistungsaufnahme des Elektromotors soweit zu begrenzen, daß er mit verringerter Drehzahl läuft und nur geringe Geräusche produziert.

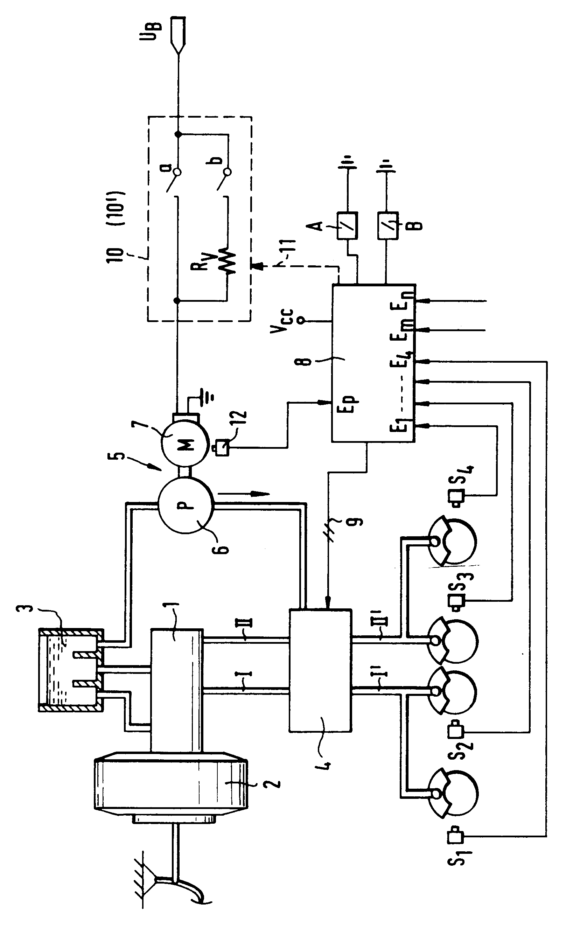

Weitere Merkmale, Vorteile und Anwendungsmöglichkeiten der Erfindung gehen aus der folgenden Beschreibung weiterer Details anhand der beigefügten Abbildung hervor, die in Prinzipdarstellung die wichtigsten, zum Verständnis der Erfindung notwendigen Komponenten einer erfindungsgemäßen Bremsanlage zeigt.

Es handelt sich im dargestellten Ausführungsbeispiel um eine zur Blockierschutz- und Antriebsschlupfregelung geeignete Bremsanlage mit einem Hauptzylinder 1, einem Bremskraftverstärker 2, einem Druckausgleich- und Vorratsbehälter 3 und einem Bremsdruckmodulator 4. Außerdem ist zur Hilfsdruckerzeugung ein Motor-Pumpenaggregat 5 mit einer Hydraulikpumpe 6 und einem elektrischen Antriebsmotor 7 vorhanden. Da zwei hydraulische getrennte Bremskreise I, I', II, II' vorhanden sind, an die jeweils zwei Fahrzeugräder angeschlossen sind, könnte anstelle der Pumpe 6 zweckmäßigerweise auch eine Hydraulikpumpe mit zwei hydraulisch getrennten Kreisen Verwendung finden. Bremsanlagen dieser Art sind allgemein bekannt und daher hier nicht dargestellt.

Zu der Bremsanlage gehört auch ein elektronischer Regler 8, der vor allem die Aufgabe hat, die mit Hilfe von Radsensoren S₁ bis S₄ gewonnenen Informationen über das Raddrehverhalten auszuwerten und Bremsdrucksteuersignale zu erzeugen. Die Bremsdrucksteuersignale werden über entsprechende Leitungen, von denen hier nur eine Mehrfachleitung 9 angedeutet ist, dem Bremsdruckmodulator 4 zugeleitet. Mit Hilfe dieser Steuersignale werden üblicherweise Magnetventile gesteuert, die je nach Regelphase den Bremsdruck in den Radbremsen konstant halten, abbauen und wieder erhöhen. Bei einer Antriebsschlupfregelung wird mit solchen Magnetventilen zunächst der Druckmittelweg von den Radbremsen zu dem Hauptzylinder 1 gesperrt und dann mit Hilfe der Hydraulikpumpe 6 der gewünschte Bremseneingriff zur Stabilisierung der durchdrehenden Räder vorgenommen. V_{cc} symbolisiert den Anschluß für die Stromversorgung der Regelelektronik.

In dem dargestellten Ausführungsbeispiel, das sich durch besonders geringen Herstellungsaufwand auszeichnet, wird die Leistungsbegrenzung während eines Antriebsschlupfregelungsvorganges durch einen ohmschen Vorwiderstand R_{V} erreicht. Hierzu sind in dem elektrischen Anschlußweg des Elektromotors 7, d.h. in dem Weg zur Batterie bzw. Spannungsquelle U_{B}, die Arbeitskontakte a und b zweier Relais A, B eingefügt. Beide Relais A, B werden unmittelbar von dem elektronischen Regler 8 gesteuert. Das Relais A ist das eigentliche Motorrelais, weil über den Arbeitskontakt dieses Relais der Motor 7 des Motorpumpenaggregates 5 ein- und ausschaltbar ist.

Bei einem Blockierschutzregelungsvorgang, ggf. in Abhängigkeit vom tatsächlichen Bedarf an hydraulischer Hilfsenergie, wird das Motorrelais A angesteuert. Es spielt keine Rolle, ob der Arbeitskontakt b des Hilfsrelais B in dieser Phase ebenfalls geschlossen wird oder offen bleibt.

Während einer Antriebsschlupfregelung wird jedoch erfindungsgemäß nur das Hilfsrelais B angesteuert. Der Vorwiderstand R_{V} im Anschlußweg von der Batterie U_{B} zum Elektromotor 7 der Pumpe 6 begrenzt die Leistungsaufnahme dieses Elektromotors 7 und dessen Drehzahl, beispielsweise auf 40 bis 60% der Nenn-Drehzahl. Der Arbeitskontakte des Motorrelais A bleibt offen.

In vielen Fällen ist es von Vorteil, beim Einsetzen eines Antriebsschlupfregelvorganges zunächst für eine kurze Zeitspanne beide Relais A und B zu erregen, um das Anlaufen des Motors 7 bzw. des Motor-Pumpenaggregates 5 zu beschleunigen. Nach einer Verzögerungszeit von beispielsweise 100 bis 500ms wird dann das Relais A abgeschaltet, so daß die Stromversorgung des Motors 7 nur noch über den Vorwiderstand R_{V} möglich ist.

In sicherheitskritischen Situationen, die beispielsweise durch bestimmte Defekte, durch das Absinken der Batteriespannung U_{B}, durch besonders geringe Außentemperaturen und dergleichen bedingt sein können, wird erfindungsgemäß die Leistungsbegrenzung, die durch das Leiten des Motor-Versorgungsstromes über den Vorwiderstand R_{V} erreicht wurde, wieder aufgehoben. Dies geschieht in dem hier gezeigten Ausführungsbeispiel durch Ansteuerung des Motorrelais A.

Zum Erkennen solcher sicherheitskritischen Situationen werden dem Regler 8 über die Eingänge Eₘ, Eₙ, Eₚ, die benötigten Informationen zugeführt, die z. B. mit Hilfe von Einrichtungen zur Spannungsüberwachung, mit Hilfe entsprechender Sensoren und dergleichen gewonnen werden. Es sind viele Ausführungsarten denkbar. Ein Beispiel einer solchen Überwachung auf sicherheitskritische Situationen wird mit Hilfe eines Drehzahlsensors 12 verwirklicht. Dieser Sensor 12 mißt die tatsächliche Drehzahl des Antriebsmotors 7 und signalisiert das Absinken der Drehzahl unter einem kritischen Wert dem Regler 8, der daraufhin die Leistungsbegrenzung aufhebt. Ein solches Absinken der Drehzahl des Motors unter einen Grenzwert, kann durch besonders hohe Belastung des Motor-Pumpenaggregates, durch ungewöhnlich geringe Batteriespannung U_{B}, durch fehlerhaften Kontakt b oder durch ein defektes Hilfsrelais B verursacht werden, um nur einige Beispiele zu nennen.

Anstelle der in seiner Gesamtheit mit 10 bezeichneten Kontaktanordnung, einschließlich des Vorwiderstandes R_{V}, kann erfindungsgemäß auch ein sogenanntes Halbleiter-Relais oder elektronisches Relais, das einen steuerbaren Widerstand darstellt, verwendet werden. In diesem Fall würden dem elektronischen Relais 10' über eine Signalleitung 11 die benötigten Steuersignale, die ebenfalls in dem Regler 8 erzeugt werden können, zugeführt werden. Ein solches elektronisches Motor-Relais ist derzeit teuerer als die dargestellte Relais-Anordnung 10, hat jedoch den Vorteil, daß durch Steuerung des Widerstandes mit Hilfe einer Pulsfolge eine praktisch verlustlose Steuerung des Motors 7 zu erreichen ist. Auch kann die Leistungsaufnahme bzw. Leistungsbegrenzung des Motors 7 mit Hilfe eines solchen elektronischen Relais sehr viel genauer und in mehreren Stufen dem tatsächlichen Bedarf durch Modulation der Ansteuer-Pulsfolge angepaßt werden. In vielen Fällen genügt allerdings die beschriebene und dargestellte zweistufige Ansteuerung des Motors 7 bzw. die Drehzahlreduzierung durch Einfügen des Vorwiderstandes R_{V} zum Erreichen des gewünschten Zieles, nämlich einer ausreichenden Minderung der störenden Geräusche des Motor-Pumpenaggregates 5. Ausschlaggebend ist dabei, daß durch Überwachung und Aufhebung der Leistungsbegrenzung in sicherheitskritischen Fällen die geforderte Betriebssicherheit der Bremsanlage erhalten bleibt. In kritischen Situationen gilt der Grundsatz, daß Sicherheit vor Komfort Vorrang besitzt.

## Patentansprüche

1. Hydraulische Bremsanlage mit Blockierschutz- und Antriebsschlupfregelung, mit einer elektromotorisch angetriebenen Hydraulikpumpe (6) zur Hilfsdruckversorgung während einer geregelten Bremsung und während einer Antriebsschlupfregelung durch Bremseingriff, mit einem elektronischen Regler (8) zur Steuerung des Hilfsdruckes und zur Modulation oder Steuerung des Bremsdruckes in den Radbremsen der geregelten Räder in Abhängigkeit von dem Raddrehverhalten und/oder von Signalen (E₁₋₄), die die ordnungsgemäße Funktion der Bremsanlage und der Elektronik wiedergeben oder auf Fehlfunktionen hinweisen, dadurch **gekennzeichnet**, daß während eines Antriebsschlupfregelungsvorganges die Drehzahl der Hydraulikpumpe (6) durch Begrenzung der Leistungsaufnahme des Pumpenmotors (7) auf einen vorgegebenen Wert, bei dem die Geräuschentwicklung relativ zur Geräuschentwicklung bei Nennleistung gering ist, reduziert wird und daß der Regler (8) in sicherheitskritischen Situationen oder bei bestimmten Fehlfunktionen der Regelung die Leistungsbegrenzung aufhebt.

2. Bremsanlage nach Anspruch 1, dadurch **gekennzeichnet**, daß zur Begrenzung der Leistungsaufnahme in den elektrischen Anschluß des Pumpenmotors (7) ein ohmscher Widerstand (R_{V}) eingefügt ist, der bei voller Leistungsaufnahme durch den Kontakt (a) eines von den elektronischen Regler gesteuerten Relais (A) überbrückt wird.

3. Bremsanlage nach Anspruch 1, dadurch **gekennzeichnet**, daß in dem elektrischen Anschluß des Pumpenmotors (7) ein steuerbarer Widerstand (10,10') eingefügt ist, der zur Steuerung bzw. Begrenzung der Leistungsaufnahme des Pumpenmotors (7) mit einer Pulsfolge, die der elektronische Regler (8) erzeugt, ansteuerbar ist.

4. Bremsanlage nach Anspruch 3, dadurch **gekennzeichnet**, daß als steuerbarer Widerstand ein sogenanntes elektronisches Relais (10') oder Halbleiter-Relais, ein Schalttransistor oder dergleichen vorgesehen ist.

5. Bremsanlage nach Anspruch 3 oder 4, dadurch **gekennzeichnet**, daß der Regler (8) durch Modulation der Pulsfolge, die zur Ansteuerung des veränderlichen Widerstandes (10') dient, die Leistungsaufnahme des Motors (7) der Hydraulikpumpe (6) dem jeweiligen Bedarf anpaßt.

6. Bremsanlage nach einem oder mehreren der Ansprüche 1 bis 5, dadurch **gekennzeichnet**, daß der Regler (8) beim Absinken der Versorgungsspannung unter einen Grenzwert die Leistungsbegrenzung aufhebt.

7. Bremsanlage nach einem oder mehreren der Ansprüche 1 bis 6, dadurch **gekennzeichnet**, daß der Regler (8) zum Ermitteln sicherheitskritischer Situationen den Regelverlauf, z.B. das Raddrehverhalten in Abhängigkeit von der Fahrzeugreferenzgeschwindigkeit, überwacht.

8. Bremsanlage nach einem oder mehreren der Ansprüche 1 bis 7, dadurch **gekennzeichnet**, daß der Regler zum Ermitteln Sicherheitskritischer Situationen die Drehzahl der Hydraulikpumpe (6) bzw. des Pumpenmotors (7) überwacht.

9. Bremsanlage nach einem oder mehreren der Ansprüche 1 bis 8, dadurch **gekennzeichnet**, daß die Leistungsbegrenzung beim Einschalten der Hydraulikpumpe (6) nach einer vorgegebenen Verzögerungszeitspanne von beispielsweise 100 bis 500ms einsetzt.

## Claims

1. A hydraulic brake system having anti-lock control and traction slip control, an electric-motor-driven hydraulic pump (6) for auxiliary pressure supply during a controlled braking operation and during a traction slip control operation by means of brake management, and an electronic control unit (8) for controlling the auxiliary pressure and for modulating or controlling the braking pressure in the wheel brakes of the controlled wheels in dependence on the rotational behaviour of the wheels and/or on signals (E₁₋₄) representing the proper operation of the brake system and of the electronic elements or pointing out malfunctions,
**characterized** in that, during a traction slip control operation, the rotational speed of the hydraulic pump (6) is reduced by limiting the power consumption of the pump motor (7) to a predetermined value, where the noise development is small relative to the noise development with nominal capacity, and in that the control unit (8) cancels the power limitation in situations critical to safety and reliability or in case of certain malfunctions of the control system.

2. A brake system as claimed in claim 1,
**characterized** in that an ohmic resistor (R_{V}) is inserted into the electric attachment of the pump motor (7) in order to limit the power consumption, the resistor (R_{V}) being bridged by the contact (a) of a relay (A), controlled by the electronic control unit, in case of full power consumption.

3. A brake system as claimed in claim 1,
**characterized** in that a controllable resistor (10, 10') is inserted into the electric attachment of the pump motor (7) and - for the purpose of respectively controlling or limiting the power consumption of the pump motor (7) - is actuatable by means of a pulse sequence generated by the electronic control unit (8).

4. A brake system as claimed in claim 3,
**characterized** in that a so-called electronic relay (10') or semiconductor relay, a switching transistor or the like is provided as controllable resistor.

5. A brake system as claimed in claim 3 or in claim 4,
**characterized** in that, by modulating the pulse sequence which serves to actuate the variable resistor (10'), the control unit (8) adapts the power consumption of the motor (7) of the hydraulic pump (6) to the respective demand.

6. A brake system as claimed in one or in several of claims 1 through 5,
**characterized** in that the control unit (8) cancels the power limitation upon a drop in the supply voltage below a limit value.

7. A brake system as claimed in one or in several of claims 1 through 6,
**characterized** in that the control unit (8) monitors the control variation such as the rotational behaviour of the wheels in dependence on the vehicle reference speed in order to detect situations critical to safety and reliability.

8. A brake system as claimed in one or in several of claims 1 through 7,
**characterized** in that the control unit monitors the rotational speed of the hydraulic pump (6) or rather of the pump motor (7) in order to detect situations critical to safety and reliability.

9. A brake system as claimed in one or in several of claims 1 through 8,
**characterized** in that the power limitation upon the turning-on of the hydraulic pump (6) comes on after a predetermined deceleration period, such as of 100 msec to 500 msec, for example.

## Revendications

1. Système hydraulique de freinage à régulation antiblocage et/ou régulation du glissement de traction, comprenant une pompe hydraulique (6), à entraînement par moteur électrique et servant à la production d'une pression auxiliaire pendant un freinage soumis à une régulation et pendant une régulation du glissement de traction au moyen d'une intervention des freins, et un régulateur électronique (8) servant à commander la pression auxiliaire et à moduler ou commander la pression de freinage dans les freins des roues soumises à la régulation, en fonction du comportement des roues en rotation et/ou de signaux (E₁₋₄) qui reproduisent le fonctionnement normal du système de freinage et du circuit électronique ou indiquent des défauts de fonctionnement., caractérisé en ce que, pendant une opération de régulation du glissement de traction, le nombre de tours de la pompe hydraulique (6) est réduit, au moyen d'une limitation de la puissance consommée par le moteur de pompe (7), à une valeur prédéterminée à laquelle l'émission de bruit est relativement faible en comparaison de l'émission de bruit correspondant à la puissance nominale et en ce que le régulateur (8) supprime la limitation de puissance dans des situations critiques en ce qui concerne la sécurité ou dans le cas de défauts de fonctionnement déterminés de la régulation.

2. Système de freinage selon la revendication 1, caractérisé en ce qu'une résistance ohmique (Rᵥ) est insérée dans le branchement électrique du moteur de pompe (7) en vue de la limitation de la puissance consommée, cette résistance ohmique étant shuntée au moyen du contact (a) d'un relais (A), commandé par le régulateur électronique, pour une pleine puissance consommée.

3. Système de freinage selon la revendication 1, caractrérisé en ce qu'une résistance réglable (10, 10') est insérée dans le branchement électrique du moteur de pompe (7), cette résistance réglable pouvant être commandée, en vue de commander ou de limiter la puissance consommée par le moteur de pompe (7), au moyen d'un train d'impulsions que produit le régulateur électronique (8).

4. Système de freinage selon la revendication 3, caractérisé en ce que, comme résistance réglable, il est prévu ce qu'il est convenu d'appeller un relais électronique (10') ou un relais à semiconducteur, un transistor de commutation ou un élément analogue.

5. Système de freinage selon l'une des revendications 3 et 4, caractérisé en ce que le régulateur (8) adapte la puissance consommée par le moteur (7) de la pompe hydraulique (6) à la valeur nécessaire à chaque instant, grâce à une modulation du train d'impulsions qui sert à commander la résistance réglable (10').

6. Système de freinage selon l'une quelconque des revendications 1 à 5, caractérisé en ce que le régulateur (8) supprime la limitation de puissance lorsque la tension d'alimentation passe au-dessous d'une valeur limite.

7. Système de freinage selon l'une quelconque des revendications 1 à 6, caractérisé en ce qu'en vue de déterminer des situations critiques en ce qui concerne la sécurité, le régulateur (8) surveille le déroulement de la régulation, par exemple le comportement des roues en rotation en fonction de la vitesse de référence du véhicule.

8. Système de freinage selon l'une quelconque des revendications 1 à 7, caractérisé en ce qu'en vue de déterminer des situations critiques en ce qui concerne la sécurité, le régulateur surveille le nombre de tours de la pompe hydraulique (6) ou du moteur de pompe (7).

9. Système de freinage selon l'une quelconque des revendications 1 à 8, caractérisé en ce que, lors de la mise en marche de la pompe hydraulique (6), la limitation de puissance est mise en service après un délai prédéterminé, par exemple compris entre 100 et 500 ms.
